# EUROPÄISCHE PATENTANMELDUNG

(11) **EP 4 067 324 A1**
(43) Veröffentlichungstag der Anmeldung: **05.10.2022**
(21) Anmeldenummer: 22163998.2
(22) Anmeldetag: 24.03.2022
(51) Int. Cl.: C05C 3/00, C05G 3/90, C05G 5/12

(54) **GRANULIERTES PH-NEUTRALES HARNSTOFF-AMMONIUMSULFAT-DÜNGEMITTEL MIT UREASEINHIBITOR**

(30) Priorität: 31.03.2021 DE 102021108187
(71) Anmelder: SKW STICKSTOFFWERKE PIESTERITZ GmbH, 06886 Lutherstadt Wittenberg (DE)
(72) Erfinder: STEMMLER, Tobias, 06886 Lutherstadt Wittenberg (DE); HUCKE, Andre, 06889 Lutherstadt Wittenberg (DE); RADICS, Ute, 06901 Kemberg (DE); SCHUSTER, Carola, 06886 Lutherstadt Wittenberg (DE)
(74) Vertreter: Grünecker Patent- und Rechtsanwälte PartG mbB

(57) **Zusammenfassung**

Die vorliegende Erfindung betrifft ein annähernd pH-neutrales Harnstoff-Ammoniumsulfat-Düngemittel in fester granulierter Form, welches zur Verminderung der Stickstoffverluste bei der Düngung mit einem Phosphorsäureamidderivat als Ureaseinhibitor behandelt ist. Bei der Herstellung des Harnstoff-Ammoniumsulfat-Granulates werden solche Zusätze verwendet, die einerseits den Granulationsprozess begünstigen und gleichzeitig den pH-Wert des Granulates in den Neutralbereich verschieben. Durch den pH-Wert des Granulates im Neutralbereich wird die Stabilität der pH-empfindlichen Phosphorsäureamide bei der Lagerung des Granulates signifikant verbessert.

## Beschreibung

### Zusammenfassung

Die vorliegende Erfindung betrifft ein annähernd pH-neutrales Harnstoff-Ammoniumsulfat-Düngemittel in fester granulierter Form, welches zur Verminderung der Stickstoffverluste bei der Düngung mit einem Phosphorsäureamidderivat als Ureaseinhibitor behandelt ist. Bei der Herstellung des Harnstoff-Ammoniumsulfat-Granulates werden solche Zusätze verwendet, die einerseits den Granulationsprozess begünstigen und gleichzeitig den pH-Wert des Granulates in den Neutralbereich verschieben. Durch den pH-Wert des Granulates im Neutralbereich wird die Stabilität der pH-empfindlichen Phosphorsäureamide bei der Lagerung des Granulates signifikant verbessert.

### Stand der Technik

Die meisten landwirtschaftlichen Nutzpflanzen benötigen für ein optimales Wachstum neben Stickstoff auch Schwefel. Einhergehend mit immer höheren Erträgen und Qualitätszielen steigt auch der Schwefelentzug aus dem Boden. Durch Umweltschutzmaßnahmen wie der Rauchgasentschwefelung sind die Schwefeleinträge aus der Atmosphäre in den Boden heutzutage sehr gering. Der Abbau von Tierbeständen führt zu einem geringeren Anfall an organischen Düngemitteln und damit auch zu einem geringeren Eintrag von Schwefel über diese in den Boden. Auch schwefelhaltige Agrochemikalien wie z.B. wie Schwefelfungizide oder Superphosphat (Rohphosphataufschluss mit Schwefelsäure) finden in immer geringerem Maß Anwendung. Gleichzeitig werden im Ergebnis eines steigenden Anteils an Kulturen mit hohem S-Bedarf (z. B. Raps) hohe Mengen an Schwefel aus dem Boden entzogen. Über Mineralisationsprozesse werden aus dem Bodenvorrat jährlich nur geringe Mengen Schwefel freigesetzt. Das reicht oft nicht aus, um landwirtschaftliche und gärtnerische Pflanzenbestände ausreichend mit Schwefel zu versorgen. Die Menge an pflanzenverfügbarem Schwefel im Boden ist in Abhängigkeit vom Standort und der Düngung teils großen Schwankungen unterlegen. Besonders in Zeiten geringer Mineralisierung wie vor oder zu Vegetationsbeginn und gleichzeitig hohem S-Bedarf der Kulturen kommt es aus den genannten Gründen häufig zu Schwefelmangel. Dieser kann wiederum zu Problemen bei der Stickstoffaufnahme führen, weil Stickstoff und Schwefel stets in einem engen und feststehenden Verhältnis zueinander für den Eiweißaufbau benötigt werden. Entsprechend führt Schwefelmangel neben einer Ertragsreduktion zu geringen Proteinqualitäten, niedrigen Erntequalitäten und einer schlechteren Stickstoff-Ausnutzung.

Aus diesem Grund empfiehlt sich neben einer Stickstoffdüngung zunehmend auch eine Düngung mit Schwefel. Da der Schwefel durch die Pflanze in Form von Sulfat aufgenommen wird, ist Ammoniumsulfat besonders als Schwefeldünger geeignet. Zur Einstellung eines auf den pflanzlichen Bedarf abgestimmten Stickstoff-Schwefel-Verhältnisses ist die kombinierte Anwendung von Ammoniumsulfat mit einem weiteren Stickstoffdünger sinnvoll. Bewährt hat sich der Einsatz von Mischdüngern aus Harnstoff und Ammoniumsulfat. Aufgrund der optimalen Anwendungseigenschaften sowie des sehr guten Streuverhaltens bei der Düngung werden Harnstoff und Ammoniumsulfat zusammen granuliert, so dass beide Nährstoffe in einer Granalie vorliegen.

Die Herstellung von Harnstoff-Ammoniumsulfat-Düngemitteln in granulierter Form kann ausgehend von hochkonzentrierten wässrigen Lösungen bzw. Suspensionen oder flüssigen Schmelzen bzw. Schmelze-Suspensionen, die Harnstoff und Ammoniumsulfat enthalten, erfolgen.

Ein bekanntes großtechnisches Verfahren zur formgebenden Umsetzung von Harnstoff-Ammoniumsulfat-Gemischen, vorzugsweise aus aufgeschmolzenen Harnstoff und feinkörnigem Ammoniumsulfat, stellt die Wirbelbett-Sprühgranulation dar. Durch eine vorgelagerte Feinvermahlung und Suspendierung von ungelöstem Ammoniumsulfat in der Harnstoffschmelze und geringe Verweilzeiten im Schmelzezustand während des Herstellungsprozesses wird ein homogenes Mischgranulat mit definiertem Kornspektrum und geminderten Biuretgehalten erzeugt (DE19724142, WO99/65845).

Der Einsatz von Granulationshilfsmitteln als Kristallisationsverzögerer für Harnstoff bzw. zur Viskositätssenkung von Harnstoff-Ammoniumsulfat-Schmelzen erhöht die Granulationsfähigkeit des Gemisches und reduziert die Staubbildung. Dadurch werden die Granulateigenschaften hinsichtlich der Morphologie, Festigkeit, Freifließbarkeit und Lagerstabilität nachhaltig verbessert. Als Granulationshilfsmittel werden neben Formaldehydharnstoffen auch anorganische Metallsalze, vorzugsweise Aluminiumsalze, wie z. B. Aluminiumsulfat, eingesetzt (DE 10342551B4, WO 2017/005446A1, US 4500336, WO 89/04291, US 4478632, DE 3118454C2, US 4943308, WO 2017/007315, EP 3542899).

Ein Nachteil bei der Anwendung harnstoffbasierter Düngemittel ist, dass der enthaltene Harnstoff durch das ubiquitär im Boden enthaltene Enzym Urease in Ammoniak und Kohlendioxid gespalten wird. Die durch die Urease im Boden bewirkte Harnstoffhydrolyse vollzieht sich rasch. Bei leichten Böden mit geringer Kationenaustauschkapazität kann nur ein Teil des gebildeten Ammoniaks als Ammonium im Boden fixiert werden, während der andere Teil an die Atmosphäre abgegeben wird. Abgesehen von Belastungen der Umwelt, sinkt damit die pflanzenbauliche und ökonomische Effizienz der Düngung.

Der Einsatz von Ureaseinhibitoren ist eine effektive Möglichkeit, die enzymatische Harnstoff-Hydrolyse deutlich zu verlangsamen. Durch die Verzögerung der Enzymreaktion kann der Düngeharnstoff unzersetzt in den Boden penetrieren, sich im Bodenraum verteilen und so auch auf leichten Bodenstandorten verlustfrei angewendet werden.

Aus der Literatur ist bekannt, dass bestimmte organische, aber auch anorganische Verbindungen die ureasekatalysierte Harnstoff-Hydrolyse zu hemmen vermögen (vgl. S. Kiss, M. Simihäian, Improving Efficiency of Urea Fertilizers by Inhibition of Soil Urease Activity, Kluwer Academic Publishers (2002)).

Die wirksamsten Ureaseinhibitoren gehören zur Substanzklasse der Phosphorsäureamide. In dieser Anmeldung wird der Begriff Phosphorsäureamid synonym für Phosphorsäuresterdiamide als auch Phosphorsäuretriamide einschließlich der analogen Thiophosphosphorsäurederivate benutzt.

Die ureasehemmende Wirkung von Phosphorsäureamiden als effektive Inhibitoren des Enzyms Urease wird z. B. in DD 122177, US 4540428, US 4530714 und WO 2006010389 beschrieben.

Zur Minimierung der Stickstoffverluste bei der Anwendung harnstoffbasierter Düngemittel haben z. B: das *N*-(n-Butyl)thiophosphorsäuretriamid (NBPT) und das N-(2-Nitrophenyl)phosphorsäuretriamid (2-NPT) kommerzielle Bedeutung erlangt.

Die Tendenz zu Stickstoffverlusten ist zwar bei harnstoffbasierten Düngemitteln mit Ammoniumsulfat deutlich geringer als bei reiner Harnstoffdüngung, jedoch ist auch hier, insbesondere unter den sich aktuell ändernden Witterungs- und Klimabedingungen, der Einsatz eines Ureaseinhibitors sinnvoll, um den Harnstoffstickstoff bestmöglich zu nutzen und die Umweltbelastung zu minimieren.

Die aufgrund ihrer Wirksamkeit als Ureaseinhibitor in Frage kommenden Phosphorsäureamide haben allerdings den Nachteil, dass sie leicht zu nicht mehr aktiven Verbindungen abgebaut werden können. So bietet sich zwar zur Kombination eines Ureaseinhibitors mit festen harnstoffbasierten Düngemitteln die Zugabe des Inhibitors zur Harnstoffschmelze beim Prill- oder Granulierungsprozess an. Allerdings können sich die Phosphorsäureamide aufgrund der hohen Temperaturen und der besonderen Bedingungen der Schmelze zersetzen oder sind innerhalb der fertigen Prills oder Granalien nicht lagerstabil.

Üblich ist deshalb die Applikation des in einem Formulierungsmittel gelösten oder suspendierten Ureaseinhibitors auf die Oberfläche des harnstoffbasierten festen Düngemittels in einer Mischtrommel oder durch Sprühcoating (EP 2456737).

Aber auch bei Applikation des Phosphorsäureamids auf die Oberfläche des festen harnstoffbasierten Düngemittels können diese Verbindungen durch die vorhandene Restfeuchte im Düngemittel oder die Luftfeuchte hydrolytisch abgebaut werden, wobei der Abbau umso schneller erfolgt, je mehr der pH-Wert vom Neutralbereich abweicht. Unter Neutralbereich oder pH-neutral soll in dieser Anmeldung ein pH-Wert von 6 - 8 verstanden werden.

Um die Stabilität des Phosphorsäureamids auf festen harnstoffbasierten Düngemitteln zu verbessern, ist eine Reihe verschiedener Lösungsmittelsysteme vorgeschlagen worden. So werden in WO 97/22568 Glykole und Glykolderivate in Verbindung mit Amiden als Formulierungsmittel offenbart.

WO 2008000196 beansprucht Glykolether als stabilisierende Lösungsmittel für Phosphoramide. Für den gleichen Effekt werden in WO 2010072184 "grüne Lösungsmittel", wie Hydroxysäureester, heterocyclische Alkohole, cyclische Kohlensäurester sowie Dicarbonsäurester eingesetzt. Ebenfalls stabilisierend sollen die in DE 102007062614 beschriebenen, hochsiedenden Amine wirken.

Die bisher bekannten Formulierungsmittel eignen sich primär für die Auftragung eines Phosphorsäureamids auf reine Harnstoffprills- oder Granulate, die einen pH-Wert im Neutralbereich aufweisen. Bei Mischdüngern mit Ammoniumsulfat, aber auch mit Phosphaten, werden Phosphorsäureamide, bedingt durch den deutlich sauren pH-Wert dieser Dünger, besonders rasch abgebaut. Unter ungünstigen Bedingungen kann schon innerhalb weniger Tage ein Großteil des Ureaseinhibitors zu unwirksamen Verbindungen abgebaut sein, so dass ein längerer Transport des Düngemittels oder gar eine Lagerung über mehrere Monate ohne Wirkungsverlust des Phosphorsäureamids unmöglich wird.

Wie in WO 2017042194 und WO 2017100507 offenbart, sollen zur Erhöhung der Stabilität von Phosphorsäureamiden auf festen Harnstoff-Ammoniumsulfat-Düngemitteln die Phosphorsäureamide zusammen mit alkalischen organischen oder anorganischen Verbindungen wie Metalloxiden, Metallhydroxiden, Metallcarbonaten, Metallsalzen organischer Säuren oder organische Basen auf das Düngemittel aufgebracht werden.

US 2020/0039893 betrifft Düngmittelpartikel, die Ureaseinhibitoren und/oder Nitrifikationsinhibitoren enthalten.

US 2014/0037570 betrifft Lösungen zur Verwendung bei der Verringerung der Stickstoffverflüchtigung umfassend N-(n-Butyl)-thiophosphorsäuretriamid (NBPT), gelöst in einem oder mehreren N-Alkylaminoalkoholen, N,N-Dialkylaminoalkoholen, N-Alkyl-N - Alkoxyaminoalkohole und Mischungen davon, sowie Verfahren zur Herstellung von Düngemitteln unter Verwendung dieser Lösungen und die resultierenden Düngemittel.

Die alkalische Verbindung soll die destabilisierende Wirkung des sauren Ammoniumsulfates neutralisieren. Dabei kommt jedoch auch das Phosphorsäureamid in engen Kontakt mit der alkalischen Verbindung. Somit eignet sich diese Verfahrensweise ausschließlich für solche Phosphorsäureamide, die in alkalischer Umgebung stabil sind, wie z. B. NBPT. Der Abbau von Phosphorsäureamiden, die in alkalischer Umgebung nicht stabil sind, wird hingegen noch beschleunigt, wenn diese zusammen mit einer alkalischen Verbindung auf das Düngemittel aufgebracht werden.

### Gegenstand der Erfindung

Der vorliegenden Erfindung lag daher die Aufgabe zugrunde, ein festes Harnstoff-Ammoniumsulfat-Düngemittel, enthaltend mindestens ein Phosphorsäureamid als Ureaseinhibitor, zur Verfügung zu stellen, wobei der pH-Wert des Düngemittels im Bereich zwischen 4,5 bis 8, bevorzugt im Neutralbereich zwischen pH 6 und pH 8 liegt und der oder die Ureaseinhibitoren unabhängig von ihrer Struktur und chemischen Eigenschaften eine sehr gute Langzeit-Lagerstabilität bei Umgebungstemperatur aufweisen. Zur Gewährleistung einer optimalen Anwendbarkeit bei der Düngung soll das Düngemittel in granulierter Form mit einer engen Korngrößenverteilung eingesetzt werden.

### Beschreibung der Erfindung

Diese Aufgabe wird erfindungsgemäß dadurch gelöst, dass gezielt Additive zur Granulation einer Harnstoff-Ammoniumsulfat-Schmelze eingesetzt werden, die sowohl den technischen Granulationsprozess begünstigen als auch den pH-Wert der Granalie auf einen pH-Wert im Bereich von 4,5 bis 8, bevorzugt auf einen pH neutralen Bereich, insbesondere auf einen pH-Wert im Bereich von 6 bis 8, gemessen als 10 gew.-%ige Lösung in Wasser, einstellen.

Unter einer Harnstoff-Ammoniumsulfat-Schmelze wird in diesem Patent ein heterogenes Stoffgemisch, bestehend aus einer flüssigen Harnstoffschmelze mit anteilig gelöstem Ammoniumsulfat und optional Wasser, sowie einem ungelösten feinkörnigen Ammoniumsulfat-Anteil, verstanden.

Als Additive werden Granulationshilfsmittel verstanden, deren Funktion hauptsächlich in der Steigerung der Granulationsfähigkeit der Harnstoff-Ammoniumsulfat-Schmelze, Reduzierung der Staubmenge und in der Verbesserung der Granulateigenschaften (z. B. Festigkeit, Oberflächenbeschaffenheit, Granulatstruktur) liegt. Die Begriffe "Additive", "Additive zur Granulierung" und "Granulationshilfsmittel" werden gleichbedeutend verwendet.

Das Additiv wird als Granulationshilfsmittel eingesetzt und begünstigt sowohl den Granulationsprozess als auch den pH-Wert der Granulatzusammensetzung, insbesondere insofern, dass die Granulatzusammensetzung einheitlich pH-neutral ist.

Unter dem Begriff "einen einheitlichen pH-Wert" wird verstanden, dass sich der pH-Wert im Inneren des Granulats (gemessen als10 gew.-%ige wässrige Lösung) von dem des äußeren Randes des Granulates um maximal 0,5 pH-Einheiten unterscheidet. Ist also der pH-Wert am äußeren Rand des Granulats, gemessen als wässrige Lösung beispielsweise pH 6, so fällt der pH-Wert im Inneren des Granulats in einen Bereich von 5,5 bis 6,5, gemessen als 10 gew.-%ige wässrige Lösung.

In einer bevorzugten Ausführungsform der Erfindung in Verbindung mit einer der oben oder unten genannten Ausführungsformen werden anorganische Metallsalze ausgewählt aus der Gruppe bestehend aus Metallsulfate, Metalloxide, Metallhydroxide und Metallcarbonate als Additive, besonders bevorzugt Aluminiumsulfat, Eisensulfat, Eisenalaune, Aluminiumalaune, Zinkoxid, Magnesiumoxid, Calciumoxid, Magnesiumhydroxid, Calciumhydroxid, Calciumcarbonat und Kombinationen davon, insbesondere Aluminiumsulfat und Magnesiumoxid sowie Kombinationen davon, zur Granulation einer Harnstoff-Ammoniumsulfat-Schmelze eingesetzt. Die Art und Menge der Additive sind so gewählt, dass die erzeugten Granalien ohne weitere modifizierende Maßnahmen einen pH-Wert im Neutralbereich aufweisen.

Das konventionell genutzte Aluminiumsulfat mit der chemischen Formel Al₂(SCO₄)₃ • x H₂O bildet eine Reihe von verschiedenen Hydraten aus, von denen die bekanntesten Vertreter das Aluminiumsulfat-Hexadecahydrat (Al₂(SO₄)₃ • 16 H₂O) und Octadecahydrat (Al₂(SO₄)₃ • 18 H₂O) sind. Die bevorzugte Form ist das Aluminiumsulfat-Hexadecahydrat, welches aber durch eine oder mehrere Hydratformen ersetzt werden kann. Ebenfalls ist der Einsatz von Alaunen in Verbindung mit Aluminium mit der allgemeinen Formel XAI(SO₄)₂ • 12 H₂O (X = K oder NH₄), möglich. Entsprechend der erfindungsgemäßen Zusammensetzung umfasst die Bezeichnung Aluminiumsulfat alle hier angegebenen chemischen Formen, d.h. Al₂(SCO₄)₃ • x H₂O und XAI(SO₄)₂ • 12 H₂O (X = K oder NH₄).

Im Fall von Magnesiumoxid mit der chemischen Formel MgO, auch Magnesia genannt, kann entsprechend der unterschiedlichen Herstellungsverfahren schweres und/oder leichtes Magnesiumoxid mit technischer Qualität oder höherer Reinheit verwendet werden. Des Weiteren ist auch der alleinige Einsatz von Magnesiumhydroxid oder in Kombination mit Magnesiumoxid möglich.

Ohne den Zusatz von Additiven weist ein granuliertes Harnstoff-Ammoniumsulfat-Düngemittel mit einem Ammoniumsulfat-Anteil von bis zu 60 Gew.-% einen durchschnittlichen pH-Wert von ca. 4 auf. Die konventionelle Applikation von sauer wirkendem Aluminiumsulfat als viskositätssenkendes Granulationshilfsmittel im großtechnischen Maßstab führte überraschenderweise zu einer pH-Wert-Erhöhung auf ungefähr 5. Die resultierende pH-Wert-Verschiebung trug zu einer erhöhten Lagerstabilität von Phosphorsäureamiden auf dem Endprodukt bei.

Ein pH-neutrales granuliertes Harnstoff-Ammoniumsulfat-Düngemittel wurde durch den alleinigen Einsatz von Magnesiumoxid erzeugt und bewirkte im Vergleich zu Granulaten ohne Zusätze bzw. mit Aluminiumsulfat eine deutliche Steigerung der Lagerstabilität von zugesetzten Phosphorsäureamiden. Allerdings zeigte es sich, dass durch die resultierende hohe Viskosität der Harnstoff-Ammoniumsulfat-Schmelze die Granulationsfähigkeit des Gemisches unter Einhaltung eines definierten Kornbandes und der damit verbundenen Granulateigenschaften signifikant verschlechtert wurde.

Überraschenderweise hat sich gezeigt, dass bei Zusatz eines oder mehrerer Granulationshilfsmittel, insbesondere bei gleichzeitiger Applikation von Aluminiumsulfat und Magnesiumoxid ein synergistischer Effekt der Komponenten im Granulationsprozess auftritt und neben der viskositätssenkenden Wirkung auf die Harnstoff-Ammoniumsulfat-Schmelze unter Erhalt der gewünschten Granulationsfähigkeit auch die gleiche pH-Wert-Verschiebung in Richtung des Neutralbereiches im Endprodukt hervorgerufen wird.

Im Stand der Technik werden Harnstoff-Ammoniumsulfat-Düngemittel beschrieben, wobei Magnesiumoxid in einem nachgeschalteten Schritt zum Harnstoff-Ammoniumsulfat-Düngemittel gegeben wird. Die Oberfläche des Granulats ist damit deutlich basisch, aber bedingt durch das saure Ammoniumsulfat ist die Gesamtzusammensetzung hingegen neutral, wenn das Granulat als Ganzes in Wasser gelöst wird und der pH-Wert als 10 gew.-%ige wässrige Lösung gemessen wird. Fügt man hier einen Ureaseinhibitor zu, liegt dieser im unmittelbaren Kontakt mit dem Magnesiumoxid auf der Oberfläche des Düngemittels, also in einer alkalischen Umgebung.

Im Gegensatz dazu weist das erfindungsgemäße Granulat einen einheitlichen pH-Wert im gesamten Granulat auf.

Darüber hinaus wurde überraschenderweise festgestellt, dass die gleichzeitige Anwendung beider Granulationshilfsmittel im Vergleich zur alleinigen Applikation eines der beiden Granulationshilfsmittel nochmals zu einer Verbesserung der Lagerstabilität eines dem Granulat zugesetzten Phosphorsäureamids führt.

Die Verwendung von anderen alkalischen Metalloxiden oder auch Metallcarbonaten als Additive, wie zum Beispiel Calciumoxid, Zinkoxid und Calciumcarbonat an Stelle von Magnesiumoxid wirkt sich zwar ebenfalls positiv auf die Lagerstabilität eines dem Granulat zugesetzten Phosphorsäureamids aus, beeinträchtigt aber durch die Bildung schwerlöslicher Sulfate oder die Entwicklung von Kohlendioxid den Granulationsprozess oder führt sogar zu dessen Abbruch.

Im Fall von Aluminiumsulfat ist der teilweise oder vollständige Austausch durch Eisen(III)-sulfat (Fe₂(SO₄)₃) und dessen hydratisierten Formen, sowie Eisenalaunen mit der chemischen Formel XFe(SO₄)₂ • 12H₂O (X = K oder NH₄) möglich.

Gegenstand des Patentes ist also ein homogenes Granulat, bestehend aus Harnstoff und Ammoniumsulfat mit einem oder mehreren Granulationshilfsmitteln sowie einem oder mehreren Phosphorsäureamidderivaten als Ureaseinhibitor, welches dadurch gekennzeichnet ist, dass der pH-Wert einer 10 gew.-%igen wässrigen Lösung des Düngemittelgranulates in einem pH-Bereich von 4,5 bis 8 liegt. In einer bevorzugten Ausführungsform der Erfindung in Verbindung mit einer der oben oder unten genannten Ausführungsformen liegt der Gehalt an Granulationshilfsmittel bezogen auf das Gewicht des erfindungsgemäßen Düngemittelgranulates bei 0,1 bis 3 Gew.-%.

In einer weiteren bevorzugten Ausführungsform der Erfindung in Verbindung mit einer der oben oder unten genannten Ausführungsformen liegt der Gehalt an Aluminiumsulfat und/oder Aluminiumalaun (berechnet als Aluminiumoxid) bezogen auf das Gewicht des erfindungsgemäßen Granulates bei 0,05 bis 0,5 Gew.-%, besonders bevorzugt bei 0,1 bis 0,2 Gew.-%.

In einer bevorzugten Ausführungsform der Erfindung in Verbindung mit einer der oben oder unten genannten Ausführungsformen liegt der Gehalt an Magnesiumoxid bezogen auf das Gewicht des erfindungsgemäßen Granulates bei 0,1 bis 2 Gew.-%, besonders bevorzugt bei 0,5 bis 1 Gew.-%.

Bei gleichzeitiger Anwendung von Aluminiumsulfat und Magnesiumoxid wird in dem erfindungsgemäßen Granulat ein solches Verhältnis von Aluminiumsulfat zu Magnesiumoxid bevorzugt, bei dem der pH-Wert einer 10 gew.-%igen wässrigen Lösung des Granulates in einem Bereich von 6 bis 8 liegt.

In einer bevorzugten Ausführungsform der Erfindung in Verbindung mit einer der oben oder unten genannten Ausführungsformen beträgt das Verhältnis von Aluminiumsulfat (berechnet als Aluminiumoxid) zu Magnesiumoxid 1 : 0,5 bis 1 : 40, besonders bevorzugt 1 : 2 bis 1 : 15.

In einer bevorzugten Ausführungsform der Erfindung in Verbindung mit einer der oben oder unten genannten Ausführungsformen beträgt der Gehalt an Ammoniumsulfat im Granulat, bezogen auf das Gewicht des Granulates, 10 Gew.-% bis 60 Gew.-%.

Das erfindungsgemäße Granulat enthält weiterhin mindestens ein Phosphorsäureamidderivat, vorzugsweise ein Phosphorsäureamidderivat der allgemeinen Struktur (I) als Ureaseinhibitor, 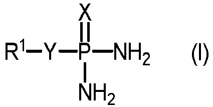 wobei in der Struktur (I) X = Sauerstoff oder Schwefel, Y = Sauerstoff oder eine Aminogruppe NR² bedeuten und R¹ und R² unabhängig voneinander Wasserstoff, jeweils substituiertes oder unsubstituiertes C1-C8-Alkyl, C3-C8-Cycloalkyl, C3-C8-Heterocycloalkyl, C6-C10-Aryl, C5-C10-Heteroaryl, COOR³ mit R³ = R¹, R² sind, einschließlich Salze, Tautomere, Polymorphe, Metallkomplexe sowie Reaktionsprodukte mit Formaldehyd und Harnstoff von Verbindungen der allgemeinen Formel (I), die ureaseinhibierende Wirkung haben.

In einer bevorzugten Ausführungsform der Erfindung in Verbindung mit einer der oben oder unten genannten Ausführungsformen ist das Phosphorsäureamidderivat N-(2-Nitrophenyl)phosphorsäuretriamid (2-NPT).

Thermisch stabile Ureaseinhibitoren können direkt bei der Granulation von Harnstoff-Ammoniumsulfat-Schmelzen zugesetzt werden. Bei dem erfindungsgemäßen Harnstoff-Ammoniumsulfat-Granulat wird der Ureaseinhibitor vorzugsweise auf die Oberfläche des Granulates aufgebracht.

Neben den erfindungsgemäßen Komponenten können in einer weiteren bevorzugten Ausführungsform der Erfindung in Verbindung mit einer der oben oder unten genannten Ausführungsformen die erfindungsgemäßen Granulate weitere Bestandteile wie zum Beispiel Farbstoffe, Antistaub- und Antibackmittel, wasserabweisende Coatings oder andere die Lagereigenschaften des Granulates verbessernde Zusätze enthalten. Durch Anwendung eines geeigneten Coatingmittels kann gleichzeitig die Stabilität der dem Granulat zugesetzten Phosphorsäureamide weiter verbessert werden. Geeignete Coatings sind vorzugsweise unpolare organische Stoffe wie Mineralöle, Pflanzenöle, Wachse und Harze oder Gemische daraus, ohne darauf beschränkt zu sein. Das Coating wird auf das Granulat vorzugsweise in einer Menge von 0,01 bis 5 Gew.-%, besonders bevorzugt 0,1 bis 1 Gew.-% aufgebracht, bezogen auf das Gewicht des Granulats.

Die technische Herstellung des erfindungsgemäßen Harnstoff-Ammoniumsulfat-Granulates erfolgt durch Granulation in einem Fließbettgranulator, bei dem die mit Granulationshilfsmitteln versetzte Harnstoff-Ammoniumsulfat-Schmelze auf ein Fließbett aus fluidisierenden Harnstoff-Ammoniumsulfat-Partikeln gesprüht wird. Der Eintrag der Granulationshilfsmittel findet in der vorgelagerten Feinvermahlung und Suspendierung von ungelöstem Ammoniumsulfat in die Harnstoffschmelze statt und unterliegt einer gewissen Verweilzeit im Schmelzezustand, um die gewünschte Wirkungsweise zu erzielen. Optimal ist eine Verweilzeit von bis zu 5 min, ohne jedoch darauf beschränkt zu sein.

Nach der Granulation wird in einem zweiten Schritt ein wasserabweisendes Coating und/oder Antibackmittel und in einem dritten Schritt ein oder mehrere Ureaseinhibitoren auf das Granulat aufgetragen, wobei die Reihenfolge der Schritte zwei und drei vertauscht werden kann oder beide Schritte in einem Schritt zusammengefasst werden können.

Übliche Coatings sind wie oben erwähnt unpolare organische Stoffe wie Mineralöle, Pflanzenöle, Wachse und Harze oder Gemische daraus.

Übliche Antibackmittel sind Alkali- und Erdalkali-silikate und -alumosilikate, Fettsäuren und deren Alkali- und Erdalkalisalze, Erdalkali-oxide- und -carbonate, Bentonit und Cellulose.

Die oberflächliche Applikation von Ureaseinhibitoren auf das Harnstoff-Ammoniumsulfat-Granulat kann als Feststoff, gelöst in einem Lösungsmittel oder als Feststoffsuspension in einer flüssigen Phase erfolgen. Die Reinheit des Ureaseinhibitors als Feststoff oder in der Lösung oder Suspension spielt keine Rolle. Industrielle Rohprodukte mit einem Ureaseinhibitorgehalt von zum Beispiel 50 Gew.-% können ebenso wie aufgereinigte Wirkstoffe mit einem Reinheitsgrad über 90% eingesetzt werden. Bei Aufbringung des Ureaseinhibitors als Lösung oder Suspension liegt der Wirkstoffgehalt in der Lösung oder Suspension vorzugsweise bei 1 bis 50 Gew.-%, besonders bevorzugt 10 bis 30 Gew.-%, berechnet als 100 Gew.-% reiner Wirkstoff. Bezogen auf das Gewicht des Harnstoff-Ammoniumsulfat-Granulates werden vorzugsweise 0,001 bis 1 Gew.-% Ureaseinhibitor, besonders bevorzugt 0,01 bis 0,1 Gew.-%, berechnet als reiner Wirkstoff, eingesetzt.

Zur Aufbringung der Ureaseinhibitoren auf das pH-neutrale Harnstoff-Ammoniumsulfat-Granulat eignen sich die üblichen Formulierungstechniken. So können z. B. Lösungen oder Suspensionen der Ureaseinhibitoren durch Sprühcoating kontinuierlich in Mischschnecken oder diskontinuierlich in Mischtrommeln appliziert werden. Die lösungsmittelfreie Aufbringung fester Ureaseinhibitoren oder Ureaseinhibitorfomulierungen ist durch Vermischen mit dem Granulat ebenfalls möglich.

Das erfindungsgemäße Granulat wird als Düngemittel eingesetzt und eignet sich besonders für schwefelbedürftige Kulturen und/oder Böden mit geringer Kationenaustauschkapazität, ohne darauf beschränkt zu sein. Gleichermaßen kann das erfindungsgemäße Granulat als Bestandteil von Mischdüngern verwendet werden.

Das erfindungsgemäße Granulat kann neben den Ureaseinhibitoren weitere agrochemische Wirkstoffe wie zum Beispiel Nitrifikationsinhibitoren enthalten. Beispiele für Nitrifikationsinhibitoren sind Dicyandiamid, 1,2,4-Triazol, 3,4-Dimethylpyrazolphosphat, 2-(N-3,4-Dimethylpyrazol)bernsteinsäure oder N-((3(5)-Methyl-1H-pyrazol-1-yl)methyl)acetamid, ohne auf diese beschränkt zu sein.

### Beispiele

Die vorliegende Erfindung wird durch die folgenden Beispiele erläutert.

### Beispiel 1 (Vergleich Stabilitätsstudien eines Ureaseinhibitors auf erfindungsgemäßem Harnstoff-Ammoniumsulfat-Granulat mit Stand der Technik in Abhängigkeit des pH-Wertes)

Im Beispiel 1 wird ein Stabilitätsvergleich des Ureaseinhibitors 2-NPT auf Harnstoff-Ammoniumsulfat-Düngemitteln nach Stand der Technik mit dem erfindungsgemäßen Granulat in Abhängigkeit des pH-Werts angestellt. Dazu wurden Harnstoff-Ammoniumsulfat-Granulate mit dem Harnstoff/Ammoniumsulfat-Verhältnis von 50 zu 50 in verschiedenen Ausführungen durch die Schmelzegranulation hergestellt und anschließend der Ureaseinhibitor 2-NPT als Suspension in Rapsöl in einer Mischtrommel aufgebracht. Die so behandelten Granulate wurden in verschlossenen Behältern bei Raumtemperatur gelagert und die Wirkstoffgehalte nach einem Tag sowie intervallartig nach einem und zwei Monaten im Vergleich zum Sollwert bestimmt. Der pH-Wert wurde als 10 gew.-%ige wässrige Lösung bestimmt.

Das Granulat der Zusammensetzung 1 nach Stand der Technik, welches keine Additive enthält, weist einen deutlich sauren pH-Wert von 3,9 auf. Dementsprechend läuft der Abbau von 2-NPT äußerst schnell ab, sodass bereits nach einem Tag nur noch ca. ein Viertel der ursprünglichen Wirkstoffmenge vorliegt.

Bei der erfindungsgemäßen Herstellung des Granulates der Zusammensetzung 2 wurde zur Harnstoff-Ammoniumsulfat-Schmelze das Additiv Aluminiumsulfat zugesetzt. Trotz des sauren pH-Wertes von Aluminiumsulfat erhöht sich der pH-Wert des Granulates von 3,9 auf 4,9, wodurch eine deutliche Verbesserung der 2-NPT-Stabilität erzielt wurde.

Das Granulat der Zusammensetzung 3 wurde analog zum Granulat der Zusammensetzung 2 unter Zusatz von Aluminiumsulfat hergestellt. Vor der Aufbringung der 2-NPT-Suspension wurde das Granulat jedoch mit dem alkalisch wirkenden Additiv Magnesiumoxid in einer Mischtrommel vermischt bzw. gepudert. Die zusätzliche oberflächliche Behandlung des sauren Granulats entsprechend der Zusammensetzung 2 führt zwar nach außen hin zu einer Zusammensetzung 3 mit einem pH-Wert im Neutralbereich (pH = 7,6), jedoch liegt durch den unmittelbaren oberflächlichen Kontakt zum Magnesiumoxid ein deutlich beschleunigter Abbau des 2-NPT vor.

Bei dem erfindungsgemäßen Granulat der Zusammensetzung 4 wurde im Vergleich zur Zusammensetzung 3 das Additiv Magnesiumoxid mit Aluminiumsulfat simultan in der Schmelzegranulation eingesetzt, welches zu einem einheitlichen Granulat mit annähernd neutralem pH-Wert führte (pH = 6,2). Auf diesem Granulat weist 2-NPT eine ausgezeichnete Stabilität während der Lagerung auf.

| **Zusammensetzung (Harnstoff/ Ammoniumsulfat 50 : 50)** | **Additive [Gew.-%]** | | **pH-Wert** | **Wiederfindungsrate 2-NPT [%]*** | | |
|---|---|---|---|---|---|---|
| | Al₂(SCO₄)₃ x 16 H₂O | MgO | | nach 1 Tag | nach 4 Wochen | nach 8 Wochen |
| **1** (Vergleichsbeispiel) | --- | --- | 3,9 | 27 | 10 | 3 |
| **2** (erfindungsgemäß) | 0,8 (eingranuliert) | --- | 4,9 | 98 | 80 | 78 |
| **3** (Vergleichsbeispiel) | 0,8 (eingranuliert) | 0,5 (oberflächlich) | 7,6 | 80 | 62 | 56 |
| **4** (erfindungsgemäß) | 0,8 (eingranuliert) | 1,0 (eingranuliert) | 6,2 | 100 | 106 | 90 |

| | | | | | | |
|---|---|---|---|---|---|---|
| * bezogen auf den Sollgehalt | | | | | | |

### Beispiel 2 (Stabilitätsstudien eines Ureaseinhibitors auf einem Harnstoff-Ammoniumsulfat-Granulat in Abhängigkeit vom Granulationshilfsmittel)

Im Beispiel 2 erfolgte für die Stabilitätsstudien die Schmelzegranulation eines Harnstoff-Ammoniumsulfat-Gemisches mit einem Harnstoff/Ammoniumsulfat-Verhältnis von 60 zu 40 in vier verschiedenen Ausführungen. Neben dem erzeugten Granulat 1 ohne Additive wurde für die Herstellung der Granulate 2 und 3 ein Zusatz von 0,8 Gew.-% an Aluminiumsulfathexadecahydrat bzw. 1,0 Gew.-% Magnesiumoxid, bezogen auf das Gewicht des Granulats, als Granulationshilfsmittel eingesetzt. In Granulat 4 wurden sowohl Aluminiumsulfat als auch Magnesiumoxid unter Beibehaltung der Aufwandmenge eingesetzt. Zur Untersuchung der Stabilität eines dem Granulat zugesetzten Ureaseinhibitors wurde der Inhibitor 2-NPT als Suspension in Rapsöl in einer Mischtrommel auf das Granulat aufgebracht und das Produkt in einem verschlossenen Gefäß bei Raumtemperatur gelagert. Als Vergleichsprobe wurde ein Harnstoffgranulat auf die gleiche Weise behandelt. Der Gehalt an 2-NPT wurde intervallartig nach einem und drei Monaten bestimmt und eine Wirkstoffwiederfindung bezogen auf den Anfangswirkstoffgehalt berechnet. Der pH-Wert wurde als 10 gew.-%ige wässrige Lösung bestimmt.

Auf Granulat 1 ohne Granulationshilfsmittel erfolgt ein sehr rascher Wirkstoffabbau. Die Verwendung von Aluminiumsulfat oder Magnesiumoxid bei den Granulaten 2 und 3 führt hingegen zu einer deutlichen Verbesserung der Wirkstoffstabilität. Der gleichzeitige Einsatz von Aluminiumsulfat und Magnesiumoxid im Granulat 4 bewirkt letztlich eine signifikante Steigerung der Stabilität des Phosphorsäureamids 2-NPT, vergleichbar mit dem Niveau auf einem reinen Harnstoffgranulat.

| **Düngemittel** | **Additiv [Gew.-%]** | | **pH-Wert** | **Wiederfindungsrate 2-NPT [%]*** | |
|---|---|---|---|---|---|
| | Al₂(SCO₄)₃ x 16 H₂O | MgO | | nach 4 Wochen | nach 12 Wochen |
| **Granulat 1** | --- | --- | 3,9 | 4% | 0% |
| **Granulat 2** | 0,8 | --- | 5,3 | 47% | 51% |
| **Granulat 3** | --- | 1,0 | 7,2 | 73% | 78% |
| **Granulat 4** | 0,8 | 1,0 | 6,7 | 100% | 91% |
| **Referenz Harnstoffgranulat** | --- | --- | 7,9 | 98% | 93% |

| | | | | | |
|---|---|---|---|---|---|
| * bezogen auf den Sollgehalt | | | | | |

## Patentansprüche

1. Granulat umfassend Harnstoff und Ammoniumsulfat, **dadurch gekennzeichnet, dass**
a) das Granulat durch Sprühgranulation einer Harnstoff-Ammoniumsulfat-Schmelze unter Zusatz eines oder mehrerer Additive erzeugt wird, wobei die resultierenden Granalien einen einheitlichen pH-Wert im Bereich von 4,5 bis 8 aufweisen, gemessen als 10 gew.-%ige wässrige Lösung des Granulates,
und
b) ein oder mehrere Phosphorsäureamidderivate als Ureaseinhibitor enthalten sind.

2. Granulat entsprechend Anspruch 1, **dadurch gekennzeichnet, dass** eine 10 gew.-%ige wässrige Lösung des Granulates einen pH-Wert im Bereich von 6 bis 8 aufweist.

3. Granulat entsprechend den Ansprüchen 1 und 2, **dadurch gekennzeichnet, dass** die Additive als anorganische Verbindung aus der Gruppe umfassend Metallsulfate, Metalloxide, Metallhydroxide und Metallcarbonate und Kombination davon eingesetzt werden, vorzugsweise Additive aus der Gruppe umfassend Aluminiumsulfat, Eisensulfat, Eisenalaunen, Aluminiumalaunen, Zinkoxid, Magnesiumoxid, Calciumoxid, Magnesiumhydroxid, Calciumhydroxid, Calciumcarbonat und Kombinationen davon.

4. Granulat entsprechend Anspruch 3, **dadurch gekennzeichnet, dass** Magnesiumoxid, Aluminiumsulfat und Kombinationen davon als Additiv eingesetzt werden.

5. Granulat entsprechend Anspruch 4, **dadurch gekennzeichnet, dass** das Aluminiumsulfat in Form eines oder mehrerer seiner Hydrate, vorzugsweise dem Hexadecahydrat und/oder Octadecahydrat verwendet wird.

6. Granulat entsprechend Anspruch 4, **dadurch gekennzeichnet, dass** bezogen auf das Gewicht des Granulates der Gehalt an Aluminiumsulfat, berechnet als Aluminiumoxid, bei 0,05 bis 0,5 Gew.-%, besonders bevorzugt bei 0,1 bis 0,2 Gew.-% liegt.

7. Granulat entsprechend Anspruch 4, **dadurch gekennzeichnet, dass** bezogen auf das Gewicht des Granulates der Gehalt an Magnesiumoxid bei 0,1 bis 2 Gew.-%, besonders bevorzugt bei 0,5 bis 1 Gew.-% liegt.

8. Granulat entsprechend den Ansprüchen 4 bis 7, **dadurch gekennzeichnet, dass** das Mengenverhältnis von Aluminiumsulfat (berechnet als Aluminiumoxid) zu Magnesiumoxid 1 : 0,5 bis 1 : 40, besonders bevorzugt 1 : 2 bis 1 : 15 beträgt.

9. Granulat entsprechend Anspruch 1, **dadurch gekennzeichnet, dass** das Phosphorsäureamidderivat mindestens eine Verbindung mit der allgemeinen Struktur (I) ist, 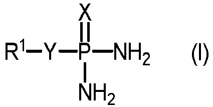 in der X = Sauerstoff oder Schwefel, Y = Sauerstoff oder eine Aminogruppe NR² bedeuten und R¹ und R² unabhängig voneinander Wasserstoff, jeweils substituiertes oder unsubstituiertes C1-C8-Alkyl, C3-C8-Cycloalkyl, C3-C8-Heterocycloalkyl, C6-C10-Aryl, C5-C10-Heteroaryl, COOR³ mit R³ = R¹, R² sind, einschließlich Salze, Tautomere, Polymorphe, Metallkomplexe sowie Reaktionsprodukte mit Formaldehyd und Harnstoff von Verbindungen der allgemeinen Formel (I), die ureaseinhibierende Wirkung haben.

10. Granulat entsprechend dem Anspruch 9, **dadurch gekennzeichnet, dass** das Phosphorsäureamidderivat *N*-(2-Nitrophenyl)phosphorsäuretriamid ist.

11. Granulat entsprechend den Ansprüchen 9 und 10, **dadurch gekennzeichnet, dass** bezogen auf das Gewicht des Harnstoff-Ammoniumsulfat-Granulates 0,001 bis 1 Gew.-%, vorzugsweise 0,01 bis 0,1 Gew.-%, eines oder mehrerer Phosphorsäureamidderivate berechnet als reiner Wirkstoff, enthalten sind.

12. Granulat entsprechend Anspruch 1, **dadurch gekennzeichnet, dass** der Gehalt an Ammoniumsulfat, bezogen auf das Gewicht des Granulates, 10 Gew.-% bis 60 Gew.-% beträgt.

13. Granulat entsprechend Anspruch 1, **dadurch gekennzeichnet, dass** zusätzlich mindestens ein Nitrifikationsinhibitor enthalten ist, wobei der Nitrifikationsinhibitor vorzugsweise Dicyandiamid, 1,2,4-Triazol, 3,4-Dimethylpyrazolphosphat, 2-(N-3,4-Dimethylpyrazol)-bernsteinsäure oder N-((3(5)-Methyl-1H-pyrazol-1-yl)methyl)acetamid ist.

14. Verwendung des Granulates entsprechend den Ansprüchen 1 bis 13 als Düngemittel.

15. Verfahren zur Herstellung eines Granulates entsprechend den Ansprüchen 1 bis 13, **dadurch gekennzeichnet, dass** in einem ersten Schritt eine Harnstoff-Ammoniumsulfat-Schmelze unter Zusatz von mindestens einem Additiv granuliert wird, in einem zweiten Schritt ein wasserabweisendes Coating und/oder Antibackmittel und in einem dritten Schritt ein oder mehrere Ureaseinhibitoren als Feststoff sowie optional ein oder mehrere Nitrifikationsinhibitoren, in einem Lösungsmittel oder als Feststoffsuspension in einer flüssigen Phase auf das Granulat aufgetragen werden, wobei die Reihenfolge der Schritte zwei und drei vertauscht werden kann oder beide Schritte in einem Schritt zusammengefasst werden können.
